# EUROPÄISCHE PATENTSCHRIFT

(11) **EP 2 182 233 B1**
(45) Veröffentlichungstag und Bekanntmachung des Hinweises auf die Patenterteilung: **01.05.2013**
(21) Anmeldenummer: 08018880.8
(22) Anmeldetag: 29.10.2008
(51) Int. Cl.: F16D 23/04

(54) **Synchronnabe**
Synchronised hub
Moyeu synchrone

(43) Veröffentlichungstag der Anmeldung: 05.05.2010
(73) Patentinhaber: Hoerbiger Antriebstechnik GmbH, 86956 Schongau (DE)
(72) Erfinder: Schauer, Manfred, 87679 Westendorf (DE); Kölzer, Michael, 87672 Rosshaupten (DE); Notz, Robert, 86956 Schongau (DE); Echtler, Peter, 86956 Schongau (DE); Sauter, Markus, 86925 Fuchstal-Leeder (DE)
(74) Vertreter: Kitzhofer, Thomas

(56) Entgegenhaltungen:
- DE-A1- 19 821 565

## Beschreibung

Die Erfindung betrifft eine Synchronnabe gemäß dem Oberbegriff des Anspruches 1.

Eine derartige Synchronnabe ist aus der DE 198 21 565 A bekannt. Diese Druckschrift beschreibt zwei unterschiedliche Lösungen für eine Synchronnabe, bei der die dem Oberbegriff des Anspruches 1 entsprechende Synchronnabe einen einstückigen Basiskörper aufweist, der mit lediglich einer einseitigen Innen- und Außenverzahnung versehen ist.

Bei einer weiteren Ausführungsform ist die bekannte Synchronnabe aus zwei Abschnitten zusammengesetzt, die beispielsweise durch Nieten oder Verschweißen miteinander zur Bildung des Synchronkörpers verbunden werden müssen.

Im Rahmen der Erfindung durchgeführte Untersuchungen haben ergeben, dass nur eine derartige Ausführung zu einer funktionstüchtigen Synchronnabe im Getriebe führt, wobei allerdings der Herstellungsaufwand aufgrund des Erfordernisses zweier miteinander zu verbindender Abschnitte, die jeweils mit Verzahnungen versehen sind, relativ hoch ist.

Es ist daher Aufgabe der vorliegenden Erfindung, eine Synchronnabe der im Oberbegriff des Anspruches 1 angegebenen Art zu schaffen, die einerseits die erforderliche Funktionstüchtigkeit hat und andererseits einfach und kostengünstig herstellbar ist.

Die Lösung dieser Aufgabe erfolgt durch die Merkmale des Anspruchs 1.

Durch ein wechselseitiges Klappen der Innen- und/oder Außenverzahnung ist es möglich, einerseits einen einzigen einstückigen scheibenförmigen Basiskörper zu verwenden und andererseits eine funktionstüchtige Verzahnung für den Betrieb der Synchronnabe im Getriebe sicherzustellen. Dementsprechend ermöglicht die erfindungsgemäße Synchronnabe das Schalten von Gängen und das Übertragen von Momenten in einem Schaltgetriebe auf funktionssichere Art und Weise.

Darüber hinaus ergibt sich andererseits der Vorteil, dass die Kosten für die Herstellung der erfindungsgemäßen Synchronnabe niedrig sind, da nur ein Basiskörper erforderlich ist, der aus einem einzigen Teil besteht und bei dem auf zusätzliche Bearbeitungsvorgänge verzichtet werden kann.

Erfindungsgemäß ist es somit möglich, PM-Naben (PM = pulvermetallurgisch) bzw. Stahl-Naben in Getrieben zu substituieren, ohne eine Einschränkung in der Funktionstüchtigkeit hinnehmen zu müssen.

Die erfindungsgemäße Synchronnabe weist neben den erwähnten Verzahnungen auch sämtliche andere übliche Merkmale auf, wie insbesondere Führungsflächen zur Druckstückaufnahme sowie für die Führung und Zentrierung von Synchronringen.

Die Unteransprüche haben vorteilhafte Weiterbildungen der Erfindung zum Inhalt.

Vorzugsweise kann der Basiskörper aus einem Blechteil umformtechnisch hergestellt werden.

Weitere Einzelheiten, Vorteile und Merkmale der Erfindung ergeben sich aus nachfolgender Beschreibung eines Ausführungsbeispiels anhand der Zeichnung.

Es zeigt:
- Fig. 1: eine perspektivische Darstellung einer ersten Ausführungsform einer erfindungsgemäßen Synchronnabe,
- Fig. 2: eine vereinfachte Darstellung einer zweiten Ausführungsform,
- Fig. 3: eine der Fig. 2 entsprechende Darstellung einer dritten Ausführungsform,
- Fig. 4: eine der Fig. 1 entsprechende Darstellung einer Synchronnabe mit einem Synchronring entsprechend einer vierten Ausführungsform,
- Fig. 5: eine der Fig. 2 entsprechende Darstellung einer fünften Ausführungsform,
- Fig. 6A, 6B: Ansichten einer sechsten Ausführungsform,
- Fig. 7, 8: Schnittansichten eines Teils der erfindungsgemäßen Synchronnabe gemäß einer siebten Ausführungsform,
- Fig. 9: eine der Fig. 1 entsprechende Darstellung einer achten Ausführungsform der erfindungsgemäßen Synchronnabe, und
- Fig. 10: eine der Fig. 2 entsprechende Darstellung einer neunten Ausführungsform der erfindungsgemäßen Synchronnabe.

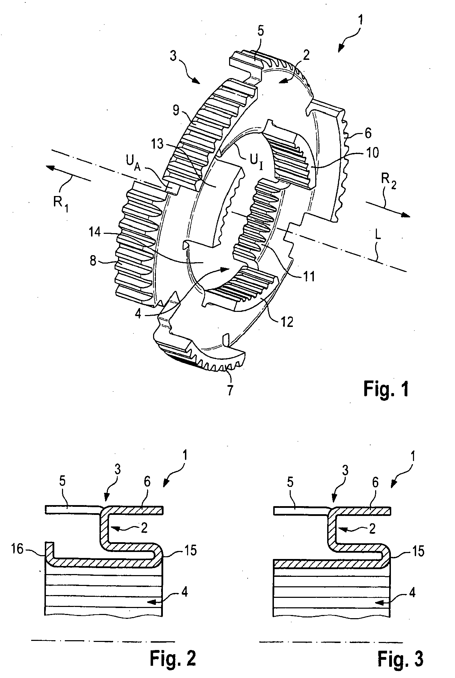

Fig. 1 der Zeichnung zeigt eine erfindungsgemäße Synchronnabe 1, die einen einstückigen scheibenförmigen Basiskörper 2, vorzugsweise aus einem Blechteil, aufweist. Die Längserstreckung des Basiskörpers 2 ist in der Figur mit der strichpunktierten Linie L verdeutlicht.

Bei der dargestellten Ausführungsform ist der Basiskörper 2 an seinem Außenumfang U_{A} mit einer Außenverzahnung 3 versehen, die in eine Mehrzahl von Segmenten unterteilt ist. Im Beispielsfalle sind sechs Segmente vorgesehen, von denen aufgrund der gewählten Darstellung fünf Segmente 5, 6, 7, 8 und 9 sichtbar sind.

Die Innenverzahnung 4, die am Innenumfang U_{I} des Basiskörpers 2 angeordnet ist, weist im Beispielsfalle ebenfalls sechs Segmente auf, von denen die Segmente 10, 11, 12 und 13 sichtbar sind.

Wie sich aus der Darstellung der Figur ergibt, sind die Zahnsegmente 5-9 bzw. 10-13 der Außenverzahnung 3 bzw. der Innenverzahnung 4 am jeweiligen Umfang U_{A} bzw. U_{I} verteilt angeordnet. Wie sich aus der Figur ferner erschließt, erstrecken sich hierbei die Zahnsegmente 5-9 sowie 10-13 jeweils abwechselnd, einmal in die Richtung R1 und die entgegengesetzte Richtung R2, wobei sich diese Richtungen R1 und R2 parallel zur Längserstreckung L erstrecken.

In Fig. 2 ist die obere Hälfte einer weiteren Ausführungsform der erfindungsgemäßen Synchronnabe 1 in schematisch stark vereinfachter Darstellung gezeigt. Hinsichtlich der mit Fig. 1 übereinstimmenden Merkmale sind dieselben Bezugsziffern verwendet worden.

Der Basiskörper 2 hat gemäß der in Fig. 2 gewählten Ansicht eine gewundene Ausbildung und weist an seinen beiden Stirnseiten jeweils Gangradanlagen bzw. Gangradanlageflächen 15 und 16 auf.

Die Innenverzahnung 4 ist bei dieser Ausführungsform einteilig und über die gesamte Breite verlaufend ausgebildet, was den Vorteil einer hohen Belastbarkeit ergibt.

Die Gangradanlage 16 ist bei dieser Ausführungsform parallel zur Gangradanlage 15 hochgezogen ausgebildet. Die Ausführungsform gemäß Fig. 3 entspricht im Wesentlichen derjenigen der Fig. 2, allerdings ist keine hochgezogene Gangradanlage 16 vorhanden.

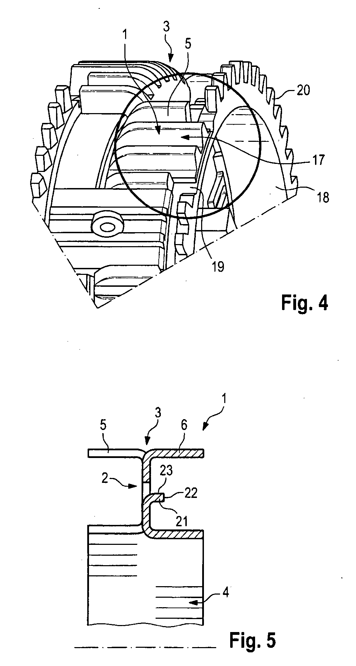

Die Ausführungsform gemäß Fig. 4 zeigt einen Ausschnitt der erfindungsgemäßen Synchronnabe 1 in perspektivischer Darstellung zur Erläuterung des mit dem schwarzen Kreis deutlich gemachten Merkmals einer Nase 17, die im Beispielsfalle ein Teil des Zahnsegments 5 der Außenverzahnung 3 der Synchronnabe 1 ist. Wie Fig. 4 verdeutlicht, ist die Nase 17 gemäß der gewählten Darstellung in Fig. 4 nach rechts gegenüber dem Zahnsegment 5 verlängert und greift hierbei in eine Ausnehmung bzw. Nut 19 in der Außenverzahnung eines Synchronrings 18 ein, so dass diese Ausführungsform die einfache Ausbildung einer Indexierung möglich macht.

Fig. 5 zeigt wiederum in der Fig. 2 entsprechender Darstellung die Synchronnabe 1, die bei dieser Ausführungsform eine aus dem Basiskörper 2 ausgeklappte Nase 21 umfasst, die stirnseitig eine Gangradanlagefläche 22 und auf der zur Außenverzahnung 3 weisenden Oberseite eine Druckstückauflagefläche 23 umfasst.

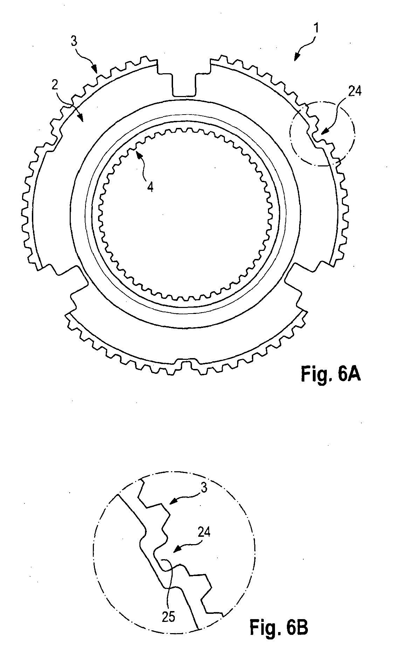

Die Ausführungsformen gemäß den Fig. 6A und 6B verdeutlichen die Möglichkeit einer Zentrierung 24, die in Fig. 6B entsprechend dem umrandeten Bereich der Fig. 6A vergrößert dargestellt ist. Hieraus ergibt sich, dass die Zentrierung 24 in Form einer Eindrückung 25 bzw. Prägung ausgebildet sein kann, die bei dieser Ausführungsform einen U-förmigen Einschnitt in die Außenverzahnung 3 ergibt, wie sich dies im Einzelnen aus der Detaildarstellung der Fig. 6B ergibt, auf die hiermit explizit Bezug genommen wird.

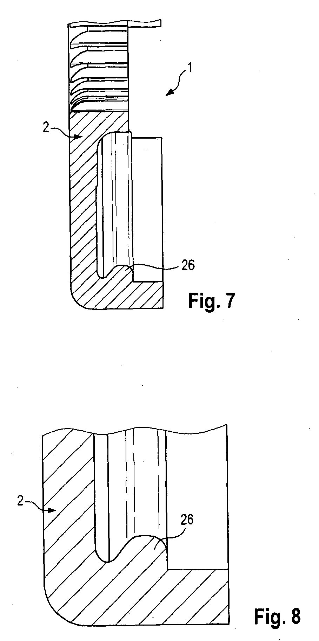

Die Fig. 7 und 8 zeigen Ausschnitte einer weiteren Ausführungsform der erfindungsgemäßen Synchronnabe 1, deren Basiskörper 2 bei dieser Ausführungsform mit einer Zentrierung in Form eines aufgeschobenen Bundes 26 versehen ist.

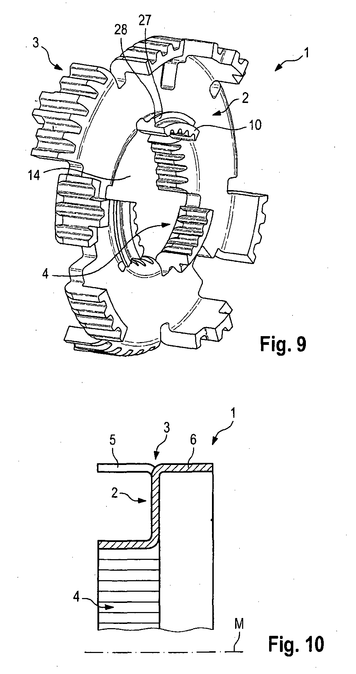

Fig. 9 zeigt eine Ausführungsform der erfindungsgemäßen Synchronnabe 1 in einer der Fig. 1 entsprechenden Darstellung. Diese Ausführungsform weist eine Außenverzahnung 3 und eine Innenverzahnung 4 auf, die jeweils segmentiert ausgebildet sind.

Am Beispiel des Zahnsegmentes 10 der Innenverzahnung 4 ist das Vorsehen eines Bundes 28 auf der zur Außenverzahnung 3 weisenden Oberseite des Zahnsegmentes 10 verdeutlicht. Dieser an- bzw. aufgeschobene Bund 28 weist eine stirnseitige Gangradanlagefläche 27 auf. Ansonsten kann bezüglich dieser Ausführungsform auf die Darlegungen zur Fig. 1 verwiesen werden.

In Fig. 10 ist schließlich eine weitere schematisch stark vereinfachte Darstellung der Synchronnabe 1 entsprechend Fig. 2 verdeutlicht, bei der nur der oberhalb der Mittellinie M liegende Bereich gezeigt ist. Bei dieser Ausführungsform weist die Synchronnabe 1 wiederum eine segmentierte Außenverzahnung 3 auf, deren geklappte Zahnsegmente 5 und 6 in Fig. 10 sichtbar sind.

Die Innenverzahnung 4 ist nicht segmentiert ausgebildet und erstreckt sich vom Basiskörper 2 aus lediglich auf eine Seite, hier die Seite des Zahnsegmentes 5 und stellt mithin diesbezüglich eine Alternative zu den Ausführungsformen gemäß den Fig. 2 und 3 dar, bei denen sich die Innenverzahnung 4 über die Gesamtbreite der Zahnsegmente 5 und 6 erstreckt.

Neben der voranstehenden schriftlichen Offenbarung der Erfindung wird hiermit explizit auf deren zeichnerische Darstellung in den Figuren 1 bis 10 verwiesen.

### Bezugszeichenliste

| | |
|---|---|
| 1 | Synchronnabe |
| 2 | Basiskörper |
| 3 | Außenverzahnung |
| 4 | Innenverzahnung |
| 5-9 | Sichtbare Zahnsegmente der Außenverzahnung |
| 10-13 | Sichtbare Zahnsegmente der Innenverzahnung |
| 14 | Durchtrittsausnehmung |
| 15, 16 | Gangradanlageflächen |
| 17 | Nase |
| 18 | Synchronring |
| 19 | Ausnehmung / Nut in der Verzahnung 18 |
| 20 | Verzahnung von 18 |
| 21 | Nase (ausgeklappt aus Basiskörper 2) |
| 22 | Gangradanlagefläche |
| 23 | Druckstückauflagefläche |
| 24 | Zentrierung |
| 25 | Eindrückung |
| 26 | an- bzw. aufgeschobener Bund |
| 27 | Gangradanlagefläche |
| 28 | an- bzw. aufgeschobener Bund |
| U_{A} | Außenumfang |
| U_{I} | Innenumfang |
| L | Längserstreckung des Basiskörpers |
| R1, R2 | entgegengesetzte Richtungen der Erstreckung der Zahnsegmente |

## Patentansprüche

1. Einstückig geformte Synchronnabe (1)
- mit einem einstückigen, scheibenförmigen Basiskörper (2), der eine Längserstreckung (L) aufweist;
- mit einer Außenverzahnung (3) am Außenumfang (U_{A}) des Basiskörpers (2); und
- mit einer Innenverzahnung (4) am Innenumfang (U_{I}) des Basiskörpers (2),
**dadurch gekennzeichnet,**
- **dass** die Außenverzahnung (3) in eine Mehrzahl von Zahnsegmenten (5-9) unterteilt ist, die sich abwechselnd, in Längserstreckung (L) gesehen, in entgegengesetzte Richtungen (R1, R2) vom Basiskörper (2) aus erstrecken.

2. Synchronnabe nach Anspruch 1, **dadurch gekennzeichnet, dass** die Innenverzahnung (4) in eine Mehrzahl von Zahnsegmenten (10-13) unterteilt ist, die sich abwechselnd, in Längserstreckung (L) gesehen, in entgegengesetzte Richtungen (R1, R2) vom Basiskörper (2) aus erstrecken.

3. Synchronnabe nach Anspruch 1 oder 2, **dadurch gekennzeichnet, dass** der Basiskörper (2) als Blechteil ausgebildet ist.

4. Einstückig geformte Synchronnabe (1)
- mit einem einstückigen, scheibenförmigen Basiskörper (2), der eine Längserstreckung (L) aufweist;
- mit einer Außenverzahnung (3) am Außenumfang (U_{A}) des Basiskörpers (2); und
- mit einer Innenverzahnung (4) am Innenumfang (U_{I}) des Basiskörpers (2),
**dadurch gekennzeichnet,**
- **dass** die Innenverzahnung (4) in eine Mehrzahl von Zahnsegmenten (10-13) unterteilt ist, die sich abwechselnd, in Längserstreckung (L) gesehen, in entgegengesetzte Richtungen (R1, R2) vom Basiskörper (2) aus erstrecken.

5. Synchronnabe nach Anspruch 4, **dadurch gekennzeichnet, dass** die Außenverzahnung (3) in eine Mehrzahl von Zahnsegmenten (5-9) unterteilt ist, die sich abwechselnd, in der Längsrichtung (L) gesehen, in entgegengesetzte Richtungen (R1, R2) vom Basiskörper (2) aus erstrecken.

6. Synchronnabe nach Anspruch 4 oder 5, **dadurch gekennzeichnet, dass** der Basiskörper (2) als Blechteil ausgebildet ist.

7. Synchronnabe nach Anspruch 1, 4 oder 9, **dadurch gekennzeichnet, dass** der Basiskörper (2) mit Gangradanlagen (15, 16; 22; 27) versehen ist.

8. Synchronnabe nach Anspruch 1, 4 oder 9, **dadurch gekennzeichnet, dass** der Basiskörper (2) eine ausgeklappte Nase (21) mit einer Gangradanlagefläche (22) und einer Druckstückauflagefläche (23) aufweist.

9. Synchronnabe nach Anspruch 1, 4 oder 9, **dadurch gekennzeichnet, dass** der Basiskörper (2) mit einer Zentrierung (24) in Form einer Eindrückung (25) versehen ist.

10. Synchronnabe nach Anspruch 1, 4 oder 9, **dadurch gekennzeichnet, dass** der Basiskörper (2) mit einer Zentrierung (24) in Form eines Bundes (26) versehen ist.

11. Synchronnabe nach Anspruch 1, 4 oder 9, **dadurch gekennzeichnet, dass** zumindest ein Zahnsegment (10) der Innenverzahnung (4) mit einem Bund (28) mit einer stirnseitigen Gangradanlagefläche (27) versehen ist.

## Claims

1. An integrally formed synchronizer hub (1) comprising
- an integral, disc-shaped base body (2) having a longitudinal extent (L),
- an external toothing (3) on the outer periphery (U_{A}) of the base body (2), and
- an internal toothing (4) on the inner periphery (U_{I}) of the base body (2),
**characterized in that**
- the external toothing (3) is subdivided into a plurality of tooth segments (5-9) which, viewed in the longitudinal extent (L), extend from the base body (2) alternately in opposite directions (R1, R2).

2. The synchronizer hub according to claim 1, **characterized in that** the internal toothing (4) is subdivided into a plurality of tooth segments (10-13) which, viewed in the longitudinal extent (L), extend from the base body (2) alternately in opposite directions (R1, R2).

3. The synchronizer hub according to claim 1 or 2, **characterized in that** the base body (2) is in the form of a sheet metal part.

4. An integrally formed synchronizer hub (1) comprising
- an integral, disc-shaped base body (2) having a longitudinal extent (L),
- an external toothing (3) on the outer periphery (U_{A}) of the base body (2), and
- an internal toothing (4) on the inner periphery (U_{I}) of the base body (2),
**characterized in that**
- the internal toothing (4) is subdivided into a plurality of tooth segments (10-13) which, viewed in the longitudinal extent (L), extend from the base body (2) alternately in opposite directions (R1, R2).

5. The synchronizer hub according to claim 4, **characterized in that** the external toothing (3) is subdivided into a plurality of tooth segments (5-9) which, viewed in the longitudinal direction (L), extend from the base body (2) alternately in opposite directions (R1, R2).

6. The synchronizer hub according to claim 4 or 5, **characterized in that** the base body (2) is in the form of a sheet metal part.

7. The synchronizer hub according to claim 1, 4 or 9, **characterized in that** the base body (2) is provided with speed change gear contacts (15, 16; 22; 27).

8. The synchronizer hub according to claim 1, 4 or 9, **characterized in that** the base body (2) includes a folded-out nose (21) having a speed change gear contact surface (22) and a thrust piece support surface (23).

9. The synchronizer hub according to claim 1, 4 or 9, **characterized in that** the base body (2) is provided with a centering means (24) in the form of an indentation (25).

10. The synchronizer hub according to claim 1, 4 or 9, **characterized in that** the base body (2) is provided with a centering means (24) in the form of a collar (26).

11. The synchronizer hub according to claim 1, 4 or 9, **characterized in that** at least one tooth segment (10) of the internal toothing (4) is provided with a collar (28) having a speed change gear contact surface (27) on the front face thereof.

## Revendications

1. Moyeu de synchronisation (1) réalisé d'un seul tenant, comportant :
- un corps de base (2) en forme de disque et réalisé d'un seul tenant, lequel présente une extension longitudinale (L) ;
- une denture extérieure (3) sur la périphérie extérieure (U_{A}) du corps de base (2) ; et
- une denture intérieure (4) sur la périphérie intérieure (U_{I}) du corps de base (2) ;
**caractérisé en ce que**
- la denture extérieure (3) est divisée en une pluralité de segments de dent (5-9) qui, vus selon l'extension longitudinale (L), s'étendent en alternance dans des directions opposées (R1, R2) depuis le corps de base (2).

2. Moyeu de synchronisation selon la revendication 1, **caractérisé en ce que** la denture intérieure (4) est divisée en une pluralité de segments de dent (10-13) qui, vus selon l'extension longitudinale (L), s'étendent en alternance dans des directions opposées (R1, R2) depuis le corps de base (2).

3. Moyeu de synchronisation selon la revendication 1 ou 2, **caractérisé en ce que** le corps de base (2) est réalisé sous forme de pièce de tôle.

4. Moyeu de synchronisation (1) réalisé d'un seul tenant, comportant :
- un corps de base (2) en forme de disque et réalisé d'un seul tenant, lequel présente une extension longitudinale (L) ;
- une denture extérieure (3) sur la périphérie extérieure (U_{A}) du corps de base (2) ; et
- une denture intérieure (4) sur la périphérie intérieure (U_{I}) du corps de base (2) ;
**caractérisé en ce que**
- la denture intérieure (4) est divisée en une pluralité de segments de dent (10-13) qui, vus selon l'extension longitudinale (L), s'étendent en alternance dans des directions opposées (R1, R2) depuis le corps de base (2).

5. Moyeu de synchronisation selon la revendication 4, **caractérisé en ce que** la denture extérieure (3) est divisée en une pluralité de segments de dent (5-9) qui, vus selon l'extension longitudinale (L), s'étendent en alternance dans des directions opposées (R1, R2) depuis le corps de base (2).

6. Moyeu de synchronisation selon la revendication 4 ou 5, **caractérisé en ce que** le corps de base (2) est réalisé sous forme de pièce de tôle.

7. Moyeu de synchronisation selon la revendication 1, 4 ou 9, **caractérisé en ce que** le corps de base (2) est pourvu de butées (15, 16 ; 22 ; 27) de pignon de vitesse.

8. Moyeu de synchronisation selon la revendication 1, 4 ou 9, **caractérisé en ce que** le corps de base (2) comporte un taquet (21) sorti qui présente une surface d'appui (22) de pignon de vitesse et une surface de support (23) de pièce de pression.

9. Moyeu de synchronisation selon la revendication 1, 4 ou 9, **caractérisé en ce que** le corps de base (2) est pourvu d'un moyen de centrage (24) sous forme d'empreinte (25).

10. Moyeu de synchronisation selon la revendication 1, 4 ou 9, **caractérisé en ce que** le corps de base (2) est pourvu d'un moyen de centrage (24) sous forme de collet (26).

11. Moyeu de synchronisation selon la revendication 1, 4 ou 9, **caractérisé en ce qu'**au moins un segment de dent (10) de la denture intérieure (4) est pourvu d'un collet (28) qui présente une surface d'appui (27) de pignon de vitesse sur le côté face frontale.
